# EUROPEAN PATENT APPLICATION

(11) **EP 4 711 715 A2**
(43) Date of publication of application: **18.03.2026**
(21) Application number: 25198576.8
(22) Date of filing: 28.08.2025
(51) Int. Cl.: G01C 21/20, G01C 21/00

(54) **INFORMATION PROCESSING APPARATUS, INFORMATION PROCESSING METHOD, AND INFORMATION PROCESSING PROGRAM**

(30) Priority: 12.09.2024 JP 2024157982
(71) Applicant: Yokogawa Electric Corporation, Tokyo 180-8750 (JP)
(72) Inventor: HARA, Akari, Musashino-shi, Tokyo, 180-8750 (JP); TANIGAWA, Youhei, Musashino-shi, Tokyo, 180-8750 (JP); SAKURAI, Yasuki, Musashino-shi, Tokyo, 180-8750 (JP)
(74) Representative: Hoffmann Eitle

(57) **Abstract**

Provided is an information processing apparatus including: a virtual map storage unit which stores a virtual map that is three-dimensional and corresponds to a real space; a map information acquisition unit which acquires map information of the real space from a plurality of moving bodies moving in the real space; a difference extraction unit which extracts a difference of each piece of the map information from the virtual map; and a virtual map update unit which updates the virtual map based on the difference in a case where the difference for a same place is extracted from two or more pieces of the map information. The map information acquisition unit may acquire the map information for each place in the real space from the plurality of moving bodies moving in the real space. The difference extraction unit may judge a similarity degree in the difference between the map information and the virtual map for the same place. The virtual map update unit may update the virtual map based on the similarity degree.

## Description

### BACKGROUND

### 1. TECHNICAL FIELD

The present invention relates to an information processing apparatus, an information processing method, and an information processing program.

### 2. RELATED ART

Patent Document 1 describes that "the map is a three-dimensional map," (claim 8).

Patent Document 2 describes that "generates three-dimensional environmental map information based on distance information acquired by the distance sensor" (claim 1).

Patent Document 3 describes that "an environmental map representing a three-dimensional position of an object present in a real space is dynamically generated" (paragraph 0034).

Patent Document 4 describes that "a position of the moving body is estimated using the sensor data and the map data" (claim 1).

Patent Document 5 describes that "an updated environmental map is generated in which the update portion is adopted or rejected according to the adoption instruction" (claim 1).

Patent Document 6 describes "a three-dimensional map generation unit which generates a three-dimensional map" (claim 1).

Patent Document 7 describes that "the travel route setting apparatus calculates a non-detection region representing a terrain portion that is unmeasurable by the surrounding monitoring sensor, and" (claim 1).

### Prior Art Documents

### Patent Documents

Patent Document 1: Japanese Patent No. 7452706
Patent Document 2: Japanese Patent Application Publication No. 2014-157478
Patent Document 3: Japanese Patent Application Publication No. 2024-62741
Patent Document 4: International Publication No. 2018/179960
Patent Document 5: Japanese Patent Application Publication No. 2009-169845
Patent Document 6: International Publication No. 2021/111613
Patent Document 7: Japanese Patent Application Publication No. 2023-42673

### SUMMARY

In a first aspect of the present invention, an information processing apparatus is provided. The information processing apparatus includes: a virtual map storage unit which stores a virtual map that is three-dimensional and corresponds to a real space; a map information acquisition unit which acquires map information of the real space from a plurality of moving bodies moving in the real space; a difference extraction unit which extracts a difference of each piece of the map information from the virtual map; and a virtual map update unit which updates the virtual map based on the difference in a case where the difference for a same place is extracted from two or more pieces of the map information. The difference extraction unit may compare the presence or absence of the structure body or the obstacle disposed on the road surface between the map information of the real space and the virtual map. The difference extraction unit may compare the arrangement of the road surface between the map information of the real space and the virtual map.

The map information acquisition unit may acquire the map information for each place equivalent to the place in the real space from the plurality of moving bodies moving in the real space. The difference extraction unit may judge a similarity degree in the difference between the map information and the virtual map for the same place. The virtual map update unit may update the virtual map based on the similarity degree.

In any of the above information processing apparatuses, the difference extraction unit may judge the similarity degree based on a resolution of an image captured by each of the plurality of moving bodies images. The image may be the map information.

In any of the above information processing apparatuses, the difference extraction unit may judge the similarity degree based on accuracy of acquiring the place of each of the plurality of moving bodies.

In any of the above information processing apparatuses, the map information acquisition unit may acquire time when the map information is acquired for the same place. The difference extraction unit may extract the difference based on the similarity degree and the time. For the same place, the map information acquisition unit may acquire first time when a first moving body acquires the map information and second time when a second moving body acquires the map information. The map information acquisition unit may acquire an acquisition interval between the first time and the second time. In a case where the acquisition interval between the first time and the second time is equal to or less than a time threshold, the virtual map update unit may update the virtual map.

Any of the above information processing apparatuses may further include: a reception unit which receives designation of a first place to which the moving body is to move or a second place to which the moving body is to not move on the virtual map; and a movement route generation unit which generates a planned movement route of the moving body based on the first place or the second place designated and a current position of the moving body. In a case where the virtual map update unit updates the virtual map, the movement route generation unit may update the planned movement route.

In any of the above information processing apparatuses, the virtual map storage unit may store characteristic information of an assumed movement route along which the moving body moves in the real space. Any of the above information processing apparatuses may further include a movement route generation unit which generates a planned movement route of the moving body based on moving performance of the moving body and the characteristic information. In a case where the virtual map update unit updates the virtual map, the movement route generation unit may update the planned movement route. The characteristic information of the assumed movement route may indicate at least one of the shape, gradient, width, or state (presence or absence of irregularities or the like) of the assumed movement route, or the presence or absence of an obstacle. The characteristic information may be included in the virtual map. The map information acquisition unit may acquire the virtual map including the characteristic information of the assumed movement route. The virtual map storage unit may store the virtual map including the characteristic information.

Any of the above information processing apparatuses may further include a movement information acquisition unit which acquires movement information regarding movement of the moving body in the real space. In a case where the movement information acquisition unit acquires that, while the moving body autonomously travels along the planned movement route to avoid an obstacle in the real space by detecting the obstacle, the moving body deviates from the planned movement route by detecting the obstacle, the movement route generation unit may further update the planned movement route.

Any of the above information processing apparatuses may further include a display unit which displays a position of the moving body deviating from the planned movement route in a case where the moving body deviates from the planned movement route.

In any of the above information processing apparatuses, the difference extraction unit may acquire the number of times of extraction in which the difference is extracted for the same place. Any of the above information processing apparatuses may further include a display unit which performs predetermined display on the same place in a case where the number of times of extraction exceeds a predetermined number of times.

Any of the above information processing apparatuses may further include: a movement information acquisition unit which acquires movement information regarding movement of the moving body in the real space; and a display unit which displays the movement information on the virtual map including an initial position and a destination position of movement of the moving body.

In any of the above information processing apparatuses, the movement information may include at least one of information of the real space in which the moving body has moved, information of the real space in which the moving body moves, or position information of the moving body.

Any of the above information processing apparatuses may further include: an instrument information acquisition unit which acquires, from the moving body, instrument information of an instrument provided in the real space; and a display unit which displays the instrument information.

In any of the above information processing apparatuses, the instrument information acquisition unit may acquire the instrument information acquired by the moving body. The instrument information acquisition unit may further acquire a position of the moving body when the moving body acquires the instrument information. The display unit may display the position of the moving body.

In a second aspect of the present invention, an information processing method is provided. The information processing method includes: a virtual map storage step of storing a virtual map that is three-dimensional and corresponds to a real space; a map information acquisition step of acquiring map information of the real space from a plurality of moving bodies moving in the real space; a difference extraction step of extracting a difference of each piece of the map information from the virtual map; and a virtual map update step of updating the virtual map based on the difference in a case where the difference for a same place is extracted from two or more pieces of the map information.

In a third aspect of the present invention, an information processing program is provided. The information processing program causes a computer to execute the information processing method.

The summary clause does not necessarily describe all necessary features of the embodiments of the present invention. In addition, the invention may also be a sub-combination of the features described above.

### BRIEF DESCRIPTION OF THE DRAWINGS

Fig. 1 is a schematic top view illustrating a real space 110 in which a plurality of moving bodies 90 move.
Fig. 2 is a perspective view illustrating an example of a three-dimensional virtual map 120 corresponding to the real space 110.
Fig. 3 is a block diagram illustrating an example of an information processing apparatus 100.
Fig. 4 is a diagram illustrating an example of a display mode of a display unit 70.
Fig. 5 is a schematic top view illustrating another example of the real space 110.
Fig. 6 is another example of the virtual map 120.
Fig. 7 is a diagram illustrating an example of a storage mode of a real space information storage unit 12 (see Fig. 3).
Fig. 8 is a flowchart illustrating an example of an information processing method according to an embodiment of the present invention.
Fig. 9 is a diagram illustrating an example of a configuration of a computer 1200 in which a plurality of aspects of the present invention may be entirely or partially embodied.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

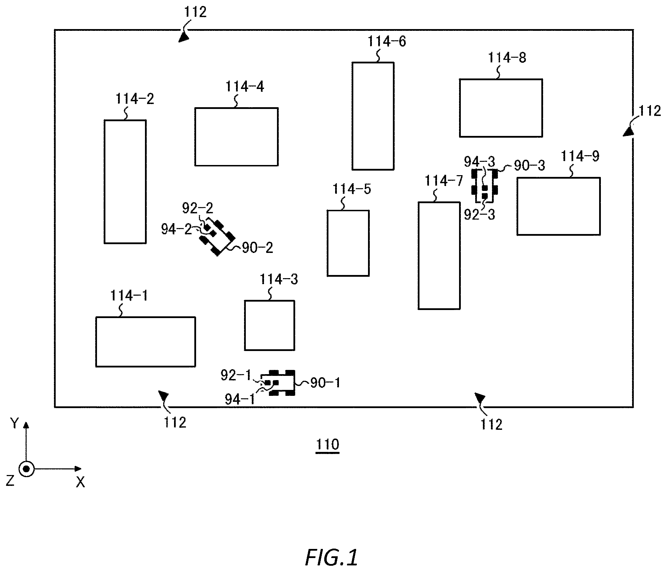

Fig. 1 is a schematic top view illustrating an example of a real space 110 in which a plurality of moving bodies 90 move. In the example of Fig. 1, the plurality of moving bodies 90 are moving bodies 90-1 to 90-3. The real space 110 is, for example, a space such as a plant. The real space 110 may be an indoor space or an outdoor space. The real space 110 may be a space that is difficult for humans to enter, such as a space where entry is highly dangerous due to environmental effects such as radiation or harmful gases or a space where entry itself is difficult due to the presence of obstacles or the like.

In the real space 110, a road surface 112 may be disposed, and a structure body 114 may be provided. In a case where the real space 110 is a space such as a plant, the road surface 112 is a floor surface of the plant. The structure body 114 is, for example, an apparatus such as an instrument, a manufacturing apparatus, a fixture, or the like. The moving body 90 may travel on the road surface 112.

The moving body 90 may be a robot that can autonomously travel, or may be a robot that can be remotely controlled by a user of an information processing apparatus 100 (described later). The moving body 90 may be a quadruped robot that moves while being in contact with the road surface 112, may be a caterpillar type or wheel type robot, or may be a drone that moves in the air. The moving body 90 may be a robot that patrols the real space 110.

The moving body 90 may include a map acquisition unit 92 that acquires map information of the real space 110. Each of the plurality of moving bodies 90 may include the map acquisition unit 92 that acquires map information of the real space 110. In this example, the moving bodies 90-1 to 90-3 include map acquisition units 92-1 to 92-3, respectively. The map information is information regarding a physical quantity of a target in the real space 110. The target may be at least one of the road surface 112 or the structure body 114.

The physical quantity of a target is, for example, the position, shape, gradient, width, or temperature of the road surface 112, the state of the road surface 112, the presence or absence of an obstacle on the road surface 112, the position, shape, or size of the structure body 114, or the like. The position of the target may be a relative position between a plurality of targets, may be a relative position with respect to a set reference position, or may be an absolute position such as latitude and longitude.

The state of the road surface 112 may be the arrangement of irregularities on the road surface 112, may be the presence or absence of cracks or the like, may be the state of whether or not the road surface 112 is wet, or may be the presence or absence of foreign matter such as sand on the road surface 112. The obstacle on the road surface 112 may refer to an object larger than a preset size (for example, at least one of a width, a depth, or a height), or may refer to an object that prevents the moving body 90 from moving due to the presence of the object.

The physical quantity of the target may include air temperature, humidity, or the concentration of a specific gas (for example, carbon dioxide or the like) in the real space 110. The map acquisition unit 92 may acquire information regarding the physical quantity of the target in the real space 110. The map acquisition unit 92 may be a sensor that acquires the information, or may be an imaging unit (described later) that captures an image indicating the information. In a case where the map acquisition unit 92 is the imaging unit, each of the moving bodies 90-1 to 90-3 includes the imaging unit.

The map acquisition unit 92 may detect a region where the moving body 90 has been able to move and a region where the moving body has not been able to move, and acquire the map information based on the detection result. The map acquisition unit 92 may judge that the road surface 112 is present in the region where the moving body 90 has been able to move, and the structure body 114, an obstacle, or the like is present in the region where the moving body 90 has not been able to move. The map acquisition unit 92 may acquire the map information based on the movement result of the moving body 90 and the image of the surrounding environment acquired by the imaging unit. For example, the map acquisition unit 92 may acquire physical quantities such as the position, shape, and size of the structure body 114 or the obstacle that obstructs the movement of the moving body 90, based on an image acquired in a state where the moving body 90 cannot move.

The plurality of moving bodies 90 may include a position information acquisition unit 94 that acquires a place of the moving body 90 in the real space 110. The position information acquisition unit 94 is, for example, a global positioning system (GPS). In the example of Fig. 1, the moving bodies 90-1 to 90-3 include position information acquisition units 94-1 to 94-3, respectively.

In the present specification, technical matters may be described by using orthogonal coordinate axes of an X axis, a Y axis, and a Z axis. In the present specification, a plane parallel to the road surface 112 is defined as an XY plane, and a direction perpendicular to the road surface 112 is defined as a Z-axis direction. In the present specification, an arbitrary direction in the XY plane is defined as an X-axis direction, and a direction orthogonal to the X axis in the XY plane is defined as a Y-axis direction. The Z-axis direction may be a direction parallel to a vertical direction, and the XY plane may be a horizontal plane.

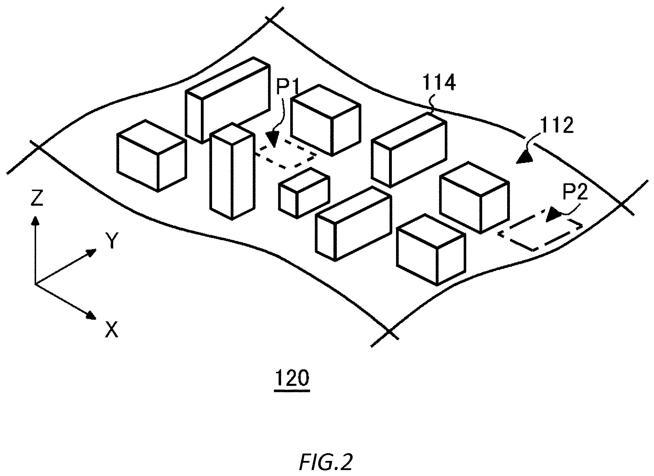

Fig. 2 is a perspective view illustrating an example of a three-dimensional virtual map 120 corresponding to the real space 110. The virtual map 120 may be an existing map or may be a map created based on map information acquired by the map acquisition unit 92 of the moving body 90. The existing map is, for example, CAD data when the real space 110 is constructed, a Google map, or the like. The map created based on the map information acquired by the map acquisition unit 92 is, for example, a map created by a simultaneous localization and mapping (SLAM) technology or the like. Fig. 2 illustrates a region of the virtual map 120 corresponding to the real space 110. The virtual map 120 includes information corresponding to a target of the real space 110. The target is one of the road surface 112 and the structure body 114 of the real space 110. In Fig. 2, only the structure body 114 corresponding to a structure body 114-6 in Fig. 1 is indicated by a reference sign of the structure body 114. The virtual map 120 may include the same information as the map information in the real space 110. That is, the virtual map 120 may include information regarding the physical quantity of the target in the real space 110.

In the virtual map 120, at least one of a first place P1 to which the moving body 90 is to move or a second place P2 to which the moving body 90 is to not move may be designated. In Fig. 2, an example of the first place P1 is indicated by a broken line, and an example of the second place P2 is indicated by an alternate long and short dash line.

The first place P1 is, for example, a place for which a user of the information processing apparatus 100 (described later) wants the moving body 90 to acquire map information in the real space 110. In a case where the real space 110 is a space that is difficult for humans to enter, and an unexpected event has occurred for the user of the information processing apparatus 100 (described later) at the specific first place P1 in the real space 110, the user may want map information for the first place P1 in the real space 110. In such a case, the user may designate the first place P1 as a place to which the moving body 90 is to move. The second place P2 is, for example, a hazardous zone, a restricted zone, or the like in the real space 110. In a case where the second place P2 is such a place, the user of the information processing apparatus 100 (described later) may designate the second place P2 as a place to which the moving body 90 is to not move.

The first place P1 and the second place P2 each may be a predetermined region in the real space 110. The region may be a region on the road surface 112. In a case where the moving body 90 is a drone, the first place P1 and the second place P2 each may be a predetermined spatial region in the real space 110, or may be a spatial region having a volume. The spatial region having a volume is, for example, a space of one or more rooms provided in the real space 110.

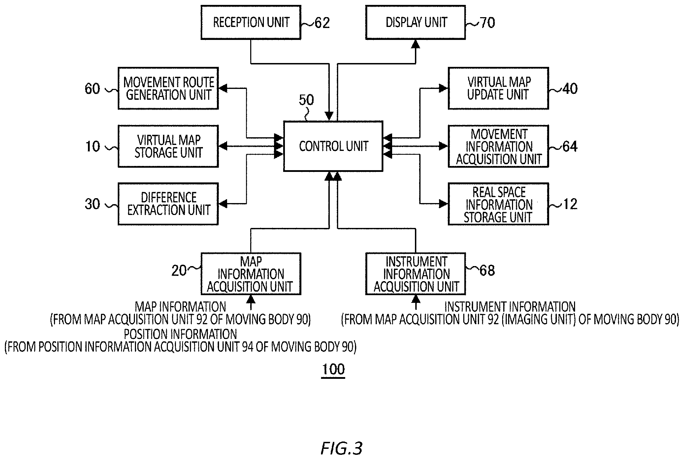

Fig. 3 is a block diagram illustrating an example of the information processing apparatus 100. The information processing apparatus 100 includes a virtual map storage unit 10, a map information acquisition unit 20, a difference extraction unit 30, a virtual map update unit 40, and a control unit 50. The information processing apparatus 100 may include a real space information storage unit 12, a movement route generation unit 60, a reception unit 62, a movement information acquisition unit 64, an instrument information acquisition unit 68, and a display unit 70. The display unit 70 is, for example, a display, a monitor, a screen of a smartphone, or the like.

A part or the whole of the information processing apparatus 100 may be realized by a computer. The control unit 50 may be a central processing unit (CPU) of the computer. In a case where the information processing apparatus 100 is realized by a computer, an information processing program for causing the computer to function as the information processing apparatus 100 may be installed in the computer, or an information processing program for causing an information processing method to be described later to be executed may be installed in the computer.

The map information acquisition unit 20 acquires the map information of the real space 110 from the plurality of moving bodies 90. The map information acquisition unit 20 may wirelessly acquire the map information acquired by the map acquisition unit 92 of the moving body 90. The map information acquisition unit 20 may acquire the map information acquired by each of the plurality of moving bodies 90. The map information acquisition unit 20 may acquire the map information for each place in the real space 110 from the plurality of moving bodies 90 moving in the real space 110. The map acquisition unit 92 of the moving body 90 may acquire the map information each time while moving in the real space 110. The map information acquisition unit 20 may acquire the map information each time the moving body 90 acquires the map information each time while moving.

The map information acquisition unit 20 may wirelessly acquire the position information acquired by the position information acquisition unit 94 of the moving body 90. The map information acquisition unit 20 may acquire the position information acquired by each of the plurality of moving bodies 90. The map information acquisition unit 20 may acquire the respective pieces of position information of the plurality of moving bodies 90 from the plurality of moving bodies 90 moving in the real space 110. In a case where the moving body 90 is moving in the real space 110, the position information acquisition unit 94 of the moving body 90 may acquire the position in the real space 110 each time. The map information acquisition unit 20 may acquire the position information each time the moving body 90 acquires the position information each time while moving.

The virtual map storage unit 10 stores the virtual map 120. The map information acquisition unit 20 may acquire the virtual map 120 via the Internet. The virtual map storage unit 10 may store the virtual map 120 acquired by the map information acquisition unit 20.

The difference extraction unit 30 extracts a difference between the virtual map 120 and each map information of the real space 110 acquired by each of the plurality of moving bodies 90. The difference extraction unit 30 may extract a difference between the map information of the real space 110 and the virtual map 120, based on the physical quantity of the target in the map information of the real space 110 and the physical quantity of the corresponding target in the virtual map 120.

For example, the difference extraction unit 30 may compare the presence or absence of the structure body 114 or the obstacle disposed on the road surface 112 between the map information of the real space 110 and the virtual map 120. As a more specific example, in a case where an obstacle present in the map information of the real space 110 is not present in the virtual map 120, the difference extraction unit 30 may judge that there is a difference in the presence or absence of an obstacle at a position where the obstacle is present in the real space 110.

In another example, the difference extraction unit 30 may compare the arrangement of the road surface 112 between the map information of the real space 110 and the virtual map 120. The arrangement of the road surface 112 is, for example, a pattern of the road surface 112 such as the position of the road surface 112 regarding an intersection, the position of the road surface 112 regarding a dead end, the position of the road surface 112 in a straight line, and the position of the road surface 112 at a corner. As a more specific example, in a case where the road surface 112 in a straight line is disposed in the map information of the real space 110, whereas a dead end is disposed in the virtual map 120, the difference extraction unit 30 may judge that the arrangement of the road surface 112 at the position is different.

In another example, in a case where the magnitude of the physical quantity of the target on the virtual map 120 is greater than the magnitude of the physical quantity of the corresponding target in the map information of the real space 110, when the magnitude of the physical quantity of the target in the map information of the real space 110 with respect to the magnitude of the physical quantity of the corresponding target in the virtual map 120 is less than a predetermined first threshold ratio, the difference extraction unit 30 extracts the target as the difference. For example, in a case where the magnitude of the physical quantity of the target on the virtual map 120 is less than the magnitude of the physical quantity of the corresponding target in the map information of the real space 110, when the magnitude of the physical quantity of the target in the map information of the real space 110 with respect to the magnitude of the physical quantity of the corresponding target in the virtual map 120 exceeds a predetermined second threshold ratio, the difference extraction unit 30 extracts the target as the difference.

For example, it is assumed that the map information acquisition unit 20 acquires, as 0.5 m, the width of the road surface 112 on which the moving body 90 is moving. In the virtual map 120, the width of the road surface 112 is assumed as 1 m. In this case, the ratio of the width of the road surface acquired by the moving body 90 to the width of the road surface 112 of the virtual map 120 is 0.5. In a case where the first threshold ratio is, for example, 0.8, this ratio is less than the first threshold ratio. Therefore, the difference extraction unit 30 extracts the width of the road surface 112 as the difference. For example, it is assumed that the map information acquisition unit 20 acquires, as 0.9 m, the width of the road surface 112 on which the moving body 90 is moving. In the virtual map 120, the width of the road surface 112 is assumed as 1 m. In this case, the ratio of the width of the road surface acquired by the moving body 90 to the width of the road surface 112 of the virtual map 120 is 0.9. In a case where the first threshold ratio is, for example, 0.8, this ratio is equal to or greater than the first threshold ratio. Therefore, the difference extraction unit 30 does not extract the width of road surface 112 as the difference.

For example, it is assumed that the map information acquisition unit 20 acquires, as 1.5 m, the width of the road surface 112 on which the moving body 90 is moving. In the virtual map 120, the width of the road surface 112 is assumed as 1 m. In this case, the ratio of the width of the road surface acquired by the moving body 90 to the width of the road surface 112 of the virtual map 120 is 1.5. In a case where the second threshold ratio is, for example, 1.2, this ratio is greater than the second threshold ratio. Therefore, the difference extraction unit 30 extracts the width of the road surface 112 as the difference. For example, it is assumed that the map information acquisition unit 20 acquires, as 1.1 m, the width of the road surface 112 on which the moving body 90 is moving. In the virtual map 120, the width of the road surface 112 is assumed as 1 m. In this case, the ratio of the width of the road surface acquired by the moving body 90 to the width of the road surface 112 of the virtual map 120 is 1.1. In a case where the second threshold ratio is, for example, 1.2, this ratio is equal to or less than the second threshold ratio. Therefore, the difference extraction unit 30 does not extract the width of road surface 112 as the difference.

For example, it is assumed that the map information acquisition unit 20 acquires the height of the structure body 114 as 1 m. In the virtual map 120, the height of the structure body 114 is assumed as 2 m. In this case, the ratio of the height of the structure body 114 acquired by the moving body 90 to the height of the corresponding structure body of the virtual map 120 is 0.5. In a case where the first threshold ratio is, for example, 0.8, this ratio is less than the first threshold ratio. Therefore, the difference extraction unit 30 extracts the height of the structure body 114 as the difference. For example, it is assumed that the map information acquisition unit 20 acquires the height of the structure body 114 as 1.8 m. In the virtual map 120, the height of the structure body 114 is assumed as 2 m. In this case, the ratio of the height of the structure body 114 acquired by the moving body 90 to the height of the corresponding structure body of the virtual map 120 is 0.9. In a case where the first threshold ratio is, for example, 0.8, this ratio is equal to or greater than the first threshold ratio. Therefore, the difference extraction unit 30 does not extract the height of the structure body 114 as the difference.

For example, it is assumed that the map information acquisition unit 20 acquires the height of the structure body 114 as 3 m. In the virtual map 120, the height of the structure body 114 is assumed as 2 m. In this case, the ratio of the height of the structure body 114 acquired by the moving body 90 to the height of the corresponding structure body of the virtual map 120 is 1.5. In a case where the second threshold ratio is, for example, 1.2, this ratio is greater than the second threshold ratio. Therefore, the difference extraction unit 30 extracts the height of the structure body 114 as the difference. For example, it is assumed that the map information acquisition unit 20 acquires the height of the structure body 114 as 2.2 m. In the virtual map 120, the height of the structure body 114 is assumed as 2 m. In this case, the ratio of the height of the structure body 114 acquired by the moving body 90 to the height of the corresponding structure body of the virtual map 120 is 1.1. In a case where the second threshold ratio is, for example, 1.2, this ratio is equal to or less than the second threshold ratio. Therefore, the difference extraction unit 30 does not extract the height of the structure body 114 as the difference.

In this example, the difference extraction unit 30 extracts a first difference between first map information acquired by the moving body 90-1 and the virtual map 120, extracts a second difference between second map information acquired by the moving body 90-2 and the virtual map 120, and extracts a third difference between third map information acquired by the moving body 90-3 and the virtual map 120. In a case where a difference from the virtual map 120 for the same place is extracted from two or more pieces of map information, the virtual map update unit 40 updates the virtual map 120 based on the difference. In a case where a difference from the virtual map 120 for the same place is extracted from two or more pieces of map information, there is a high probability that the map information on the virtual map 120 and the current situation of the real space 110 are different for the corresponding position. Therefore, in a case where a difference from the virtual map 120 for the same place is extracted from two or more pieces of map information, the virtual map update unit 40 updates the virtual map 120 based on the difference. Accordingly, the current situation of the real space 110 can be reflected on the virtual map 120. The virtual map update unit 40 may update the virtual map 120 by updating the physical quantity of the target regarding the difference in the virtual map 120 to the physical quantity of the corresponding target in the map information of the real space 110.

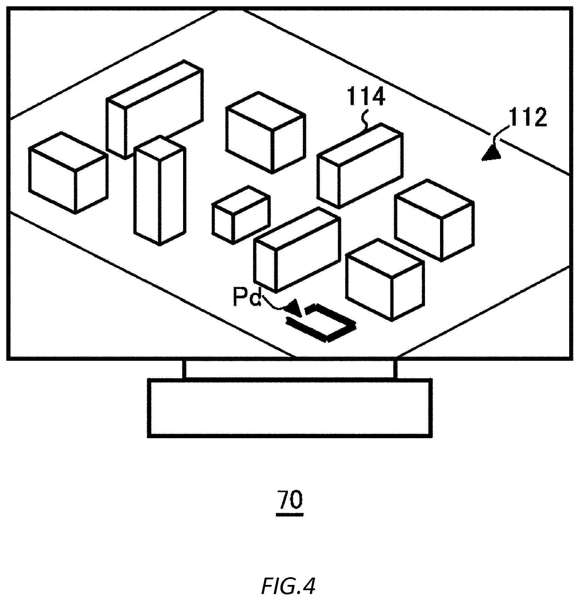

Fig. 4 is a diagram illustrating an example of a display mode of the display unit 70. The display unit 70 of this example is a display. The display unit 70 may display the virtual map 120. The display unit 70 may display the updated virtual map 120. The display unit 70 may display the place for which the difference is extracted from two or more pieces of map information. In the example of Fig. 4, the virtual map 120 illustrated in Fig. 2 is displayed on the display unit 70. However, in Fig. 4, illustration the first place P1 and the second place P2 illustrated in Fig. 2 is omitted.

The display unit 70 may perform predetermined display at the place for which the difference is extracted. The predetermined display is, for example, display of emphasizing the place for which the difference is extracted, such as surrounding, with a frame, the place for which the difference is extracted or making the place to blink. In the example of Fig. 4, a place Pd for which a difference is extracted is surrounded by a black frame. The place Pd is adjacent to the structure body 114-7 (see Fig. 1) in the real space 110 in the X-axis direction and is adjacent to the structure body 114-9 (see Fig. 1) in a direction opposite to the Y-axis direction.

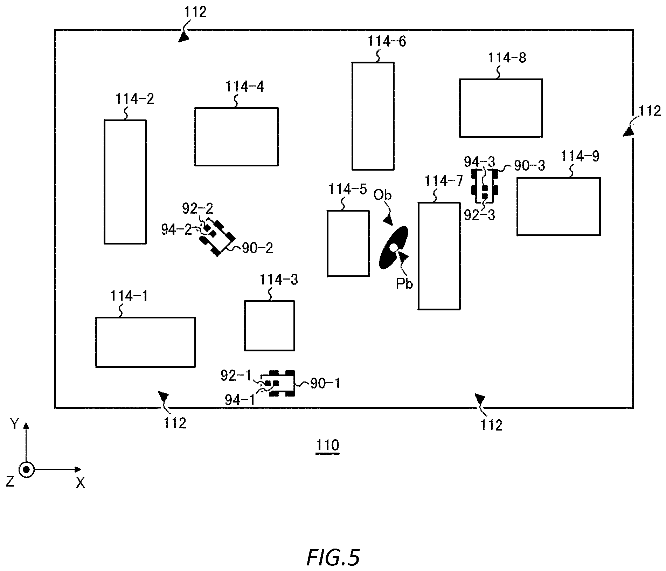

Fig. 5 is a schematic top view illustrating another example of the real space 110. In Fig. 5, an obstacle Ob is present at a position Pb of the real space 110 in Fig. 1. In this example, the position Pb is a position on the XY plane. In Fig. 4, the obstacle Ob is illustrated in an elliptical shape. The position Pb is between the structure body 114-5 and the structure body 114-7 in the X-axis direction.

The difference extraction unit 30 may judge a similarity degree in the difference between the map information and the virtual map 120 for the same place. For example, the difference extraction unit 30 judges a similarity degree between the first difference between the map information acquired from the moving body 90-1 and the virtual map 120 and the second difference between the map information acquired from the moving body 90-2 and the virtual map 120 at the same place Pb.

In a case where both the first difference and the second difference indicate the same content (that is, a case where the similarity degree is maximum), the difference extraction unit 30 may reflect the content indicated by the first difference and the second difference on the virtual map 120. The case where the differences are the same is, for example, a case where the presence or absence of the structure body 114 or the obstacle Ob disposed on the road surface 112 is consistent. As a more specific example, in a case where the obstacle Ob that is not present in the virtual map 120 is present in the first difference and the second difference, the difference extraction unit 30 may judge that the first difference and the second difference indicate the same content.

As another example of the differences having the same content, for example, there is a case where the pattern of the road surface 112 such as the position of the road surface 112 regarding an intersection, the position of the road surface 112 regarding a dead end, the position of the road surface 112 in a straight line, and the position of the road surface 112 at a corner is consistent.

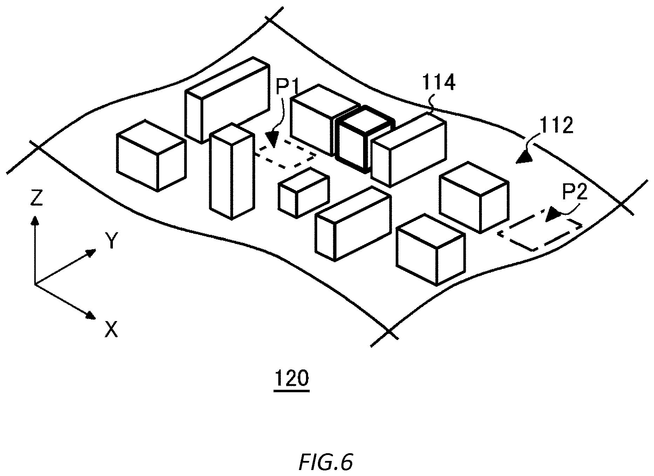

Fig. 6 is another example of the virtual map 120. Fig. 6 is a more specific example in which both the first difference and the second difference extracted by the difference extraction unit 30 indicate the same content. In the example of Fig. 6, another structure body 114 is disposed at the position of the virtual map 120 corresponding to a space in the X-axis direction between the structure body 114-4 and the structure body 114-6 of the real space 110. The virtual map 120 of Fig. 6 is different from the virtual map 120 of Fig. 2 in this respect. In Fig. 6, the another structure body 114 is indicated by a thick line.

In the virtual map 120 of Fig. 6, due to the arrangement of the another structure body 114, the road surface 112 between the structure body 114-4 and the structure body 114-6 in the X-axis direction becomes in a state where the moving body 90 cannot pass through the road surface 112 in the Y-axis direction (dead-end state). However, in the real space 110, the position of the another structure body 114 in the virtual map 120 is passable. In a case where the difference extraction unit 30 extracts the first difference and the second difference for the position, the difference extraction unit 30 may judge that the first difference and the second difference indicate the same content.

In another example, it is assumed that, for the same place, the map information acquisition unit 20 acquires, as 0.5 m, the width of the road surface 112 acquired by the moving body 90-1 and acquires, as 0.7 m, the width of the road surface 112 acquired by the moving body 90-2. In the virtual map 120, the width of the road surface 112 is assumed as 1 m. In this case, the ratio of the width of the road surface acquired by the moving body 90-1 to the width of the road surface 112 of the virtual map 120 is 0.5, and the ratio of the width of the road surface acquired by the moving body 90-2 thereto is 0.7. In a case where the first threshold ratio is, for example, 0.8, these ratios are less than the first threshold ratio. Therefore, the difference extraction unit 30 extracts the width of the road surface 112 as the first difference and the second difference.

The virtual map update unit 40 may update the virtual map 120 based on the similarity degree of the differences. For example, in a case where it is judged that the similarity degree of the differences is equal to or greater than a predetermined threshold similarity degree, the virtual map update unit 40 updates the virtual map 120. In this example, the ratio regarding the first difference is 0.5, and the ratio regarding the second difference is 0.7. The similarity degree of the differences may be, for example, a proportion of another ratio to the maximum value of the ratio regarding the difference. In this example, the proportion is 0.5/0.7 (≈ 0.71). In a case where the predetermined threshold similarity degree is, for example, 0.80, the proportion is less than the threshold similarity degree. Therefore, the virtual map update unit 40 does not update the virtual map 120. For example, in a case where the map information acquisition unit 20 acquires, as 0.6 m, the width of the road surface 112 acquired by the moving body 90-2, the ratio regarding the second difference is 0.6. In this case, the proportion of the ratio regarding the first difference to the ratio regarding the second difference is 0.5/0.6 (≈ 0.83). In a case where the predetermined threshold similarity degree is, for example, 0.80, the proportion is equal to or greater than the threshold similarity degree. Therefore, the virtual map update unit 40 updates the virtual map 120.

Each of the plurality of moving bodies 90 may include an imaging unit (see Fig. 1) that images map information. The imaging unit is an example of the map acquisition unit 92. In the example of Fig. 1, the moving body 90-1 includes a first imaging unit that images the first map information, the moving body 90-2 includes a second imaging unit that images the second map information, and the moving body 90-3 includes a third imaging unit that images the third map information.

The difference extraction unit 30 may judge the similarity degree of the differences based on the resolution of the imaging unit. For example, in a case where the first resolution of the first imaging unit is A (pixels per inch (ppi)), the second resolution of the second imaging unit is B (ppi), and the third resolution of the third imaging unit is C (ppi), the difference extraction unit 30 may calculate a weighted average of the first difference to the third difference as the similarity degree of the differences, where the weighting of the first difference is A/(A+B+C), the weighting of the second difference is B/(A+B+C), and the weighting of the third difference is C/(A+B+C). As the resolution of the imaging unit is higher, the accuracy of the ratio regarding the difference is likely to be higher, and as the resolution of the imaging unit is lower, the accuracy of the ratio regarding the difference is likely to be lower. Therefore, the difference extraction unit 30 may increase the weighting of the difference as the resolution of the imaging unit is higher, and may decrease the weighting of the difference as the resolution of the imaging unit is lower. Accordingly, the difference extraction unit 30 can extract the difference reflecting the resolution. Note that, as the resolution of the imaging unit, a resolution of an image, such as the image of the surrounding environment, acquired by the imaging unit, the map information, or the like may be used.

For example, in a case where the first resolution is 200 ppi, the second resolution is 300 ppi, and the third resolution is 350 ppi, the weighting of the first difference is 0.235, the weighting of the second difference is 0.353, and the weighting of the third difference is 0.412. For example, in a case where the ratio regarding the first difference is 0.5, the ratio regarding the second difference is 0.7, and the ratio regarding the third difference is 0.75, the weighted average of the first difference to the third difference is 0.673 (= 0.5×0.235 + 0.7×0.353 + 0.75×0.412). The difference extraction unit 30 may use the weighted average value as the similarity degree of the differences. In a case where the predetermined threshold similarity degree is, for example, 0.80, the weighted average value is less than the threshold similarity degree. Therefore, the virtual map update unit 40 does not update the virtual map 120.

The difference extraction unit 30 may judge the similarity degree of the differences based on the accuracy of the position information acquisition unit 94. For example, in a case where the first accuracy of the position information acquisition unit 94-1 is α (m), the second accuracy of the position information acquisition unit 94-2 is β (m), the third accuracy of the position information acquisition unit 94-3 is γ (m), and α > β > γ, the difference extraction unit 30 may calculate a weighted average of the first difference to the third difference as the similarity degree of the differences, where the weighting of the first difference is γ/(α+β+γ), the weighting of the second difference is β/(α+β+γ), and the weighting of the third difference is α/(α+β+γ). As the accuracy of the position information acquisition unit 94 is higher, the accuracy of the ratio regarding the difference is likely to be higher, and as the accuracy of the position information acquisition unit 94 is lower, the accuracy of the ratio regarding the difference is likely to be lower. Therefore, the difference extraction unit 30 may increase the weighting of the difference as the accuracy of the position information acquisition unit 94 is higher, and may decrease the weighting of the difference as the accuracy of the position information acquisition unit 94 is lower. Accordingly, the difference extraction unit 30 can extract the difference reflecting the accuracy of the position information.

For example, in a case where the first accuracy is 3 m, the second accuracy is 2 m, and the third accuracy is 1 m, the weighting of the first difference is 0.167 (= 1/6), the weighting of the second difference is 0.333 (= 2/6), and the weighting of the third difference is 0.5 (= 3/6). For example, in a case where the ratio regarding the first difference is 0.5, the ratio regarding the second difference is 0.7, and the ratio regarding the third difference is 0.75, the weighted average of the first difference to the third difference is 0.6916 (= 0.5×0.167 + 0.7×0.333 + 0.75×0.5). The difference extraction unit 30 may use the weighted average value as the similarity degree of the differences. In a case where the predetermined threshold similarity degree is, for example, 0.80, the weighted average value is less than the threshold similarity degree. Therefore, the virtual map update unit 40 does not update the virtual map 120.

The map information acquisition unit 20 may acquire the time when the map information is acquired for the same place. For example, for the same place, the map information acquisition unit 20 acquires first time when the moving body 90-1 acquires the map information and second time when the moving body 90-2 acquires the map information. The map information acquisition unit 20 may acquire an acquisition interval between the first time and the second time.

The difference extraction unit 30 may extract the difference based on the similarity degree of the differences for the same place and the time when the map information acquisition unit 20 has acquired the map information for the corresponding place. For example, as described above, in a case where the ratio regarding the first difference is 0.5, the ratio regarding the second difference is 0.6, and the predetermined threshold similarity degree is, for example, 0.80, the proportion (0.5/0.6 (≈ 0.83)) of the ratio regarding the first difference to the ratio regarding the second difference is equal to or greater than the threshold similarity degree. Therefore, the virtual map update unit 40 can update the virtual map 120. In this case, in a case where the acquisition interval between the first time and the second time exceeds a predetermined time threshold, the virtual map update unit 40 may not update the virtual map 120. In a case where the acquisition interval between the first time and the second time is equal to or less than the time threshold, the virtual map update unit 40 may update the virtual map 120. The time threshold is, for example, 6 hours, 12 hours, 24 hours (one day), 48 hours (two days), 120 hours (five days), or 168 hours (one week).

The state of the road surface 112 or the structure body 114 (see Fig. 1) at the same place may change with the lapse of time. In a case where the state of the road surface 112 or the structure body 114 at the first time at the same place is different from the state at the second time, the virtual map 120 at the first time may be different from the virtual map 120 at the second time. Therefore, in a case where the acquisition interval between the first time and the second time exceeds the time threshold, the virtual map 120 in the extraction of the difference may be different between the first time and the second time. In a case where the virtual map 120 is different, it is difficult to compare the difference at the first time with the difference at the second time on the same basis. Therefore, even when the similarity degree of the differences for the same place is equal to or greater than the threshold similarity degree, in a case where the acquisition interval between the first time and the second time exceeds the predetermined time threshold, the virtual map update unit 40 may not update the virtual map 120. Accordingly, the virtual map update unit 40 can update the virtual map 120 more accurately.

The difference extraction unit 30 may acquire the number of times of extraction in which the difference is extracted for the same place. The number of times of extraction may be a sum of the numbers of times of extraction performed on the respective pieces of map information from the plurality of moving bodies 90. For example, in a case where a difference for a specific place is extracted twice from the first map information from the moving body 90-1, the difference for the specific place is extracted once from the second map information from the moving body 90-2, and the difference for the specific place is extracted once from the third map information from the moving body 90-3, the difference extraction unit 30 acquires, as the number of times of extraction, four times.

In a case where the number of times of extraction exceeds a predetermined number of times, the display unit 70 may perform predetermined display on the place for which the difference is extracted. The predetermined number of times may be 2 times, 5 times, or 10 times. The predetermined display is, for example, display of emphasizing that the place for which the difference is extracted is a place for which the difference is extracted the number of times of extraction exceeding the predetermined number of times, such as surrounding, with a frame, the place for which the difference is extracted or making the place to blink.

In a place in the real space 110 for which the number of times of extraction as the difference is large, there is a high probability that an event that causes a change in map information for the place has occurred. The event that causes a change in the map information is, for example, a case where the position of the structure body 114 in the real space 110 changes due to constant vibration of the structure body 114 itself, thereby changing the width of the road surface 112 adjacent to the structure body 114, or the like. Therefore, the display unit 70 performs predetermined display on the place for which the difference is extracted the number of times of extraction exceeding the predetermined number of times, whereby the user of the information processing apparatus 100 can recognize the place to gaze at in the real space 110.

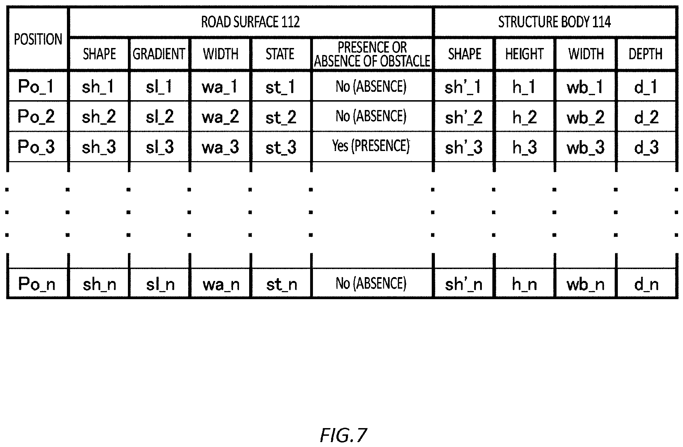

Fig. 7 is a diagram illustrating an example of a storage mode of the real space information storage unit 12 (see Fig. 3). The real space information storage unit 12 stores the information of the real space 110. The real space information storage unit 12 may store the map information acquired by the map information acquisition unit 20. The real space information storage unit 12 may store the map information and the position information acquired by the map information acquisition unit 20 in association with each other. In this example, the real space information storage unit 12 stores n positions in the real space 110, a physical quantity regarding the road surface 112 at each position, and a physical quantity regarding the structure body 114 at each position in association with each other. In this example, the physical quantity regarding the road surface 112 is a shape sh, a gradient sl, a width wa, or a state st of the road surface 112, or the presence or absence of an obstacle. In this example, the physical quantity regarding the structure body 114 is a shape sh', a height h, a width wb, or a depth d of the structure body 114.

The reception unit 62 (see Fig. 3) receives designation of the first place P1 (see Fig. 2) or the second place P2 (see Fig. 2) on the virtual map 120. As described above, the first place P1 is a place to which the moving body 90 is to move, and the second place P2 is a place to which the moving body 90 is to not move. The movement route generation unit 60 generates the planned movement route of the moving body 90 based on the first place P1 or the second place P2 and the current position of the moving body 90. The movement route generation unit 60 may generate the planned movement route of the moving body 90 based on the first place P1 or the second place P2, the current position of the moving body 90, and the information of the real space 110 stored in the real space information storage unit 12. For example, the movement route generation unit 60 generates, as the planned movement route of the moving body 90, the shortest movement route from the current position to the first place P1. For example, the movement route generation unit 60 generates the shortest movement route from the current position to the first place P1 and a route that does not pass through the second place P2. The physical quantity regarding the road surface 112 and the physical quantity regarding the structure body 114 are stored in the real space information storage unit 12. Therefore, the movement route generation unit 60 can generate the planned movement route of the moving body 90 based on the first place P1 or the second place P2, the current position of the moving body 90, and at least one of the physical quantity regarding the road surface 112 or the physical quantity regarding the structure body 114.

The virtual map storage unit 10 (see Fig. 3) may store characteristic information of an assumed movement route along which the moving body 90 moves in the real space 110. The assumed movement route may be the route of the moving body 90 assumed by the user of the information processing apparatus 100. The characteristic information of the assumed movement route indicates at least one of the shape, gradient, width, or state (the presence or absence of irregularities or the like) of the assumed movement route, or the presence or absence of an obstacle. The characteristic information may be included in the virtual map 120. The map information acquisition unit 20 may acquire the virtual map 120 including the characteristic information of the assumed movement route. The virtual map storage unit 10 may store the virtual map 120 including the characteristic information.

The movement route generation unit 60 may generate the planned movement route of the moving body 90 based on the moving performance of the moving body 90 and the characteristic information of the assumed movement route. The moving performance of the moving body 90 is, for example, the maximum speed of the moving body 90, the width of a route through which the moving body 90 can pass, the gradient of a route through which the moving body 90 can move, or the like. For example, the movement route generation unit 60 generates the planned movement route in which the gradient of the assumed movement route in the characteristic information is less than the maximum value of the gradient that the moving body 90 can move on. For example, the movement route generation unit 60 generates the planned movement route in which the width of the assumed movement route in the characteristic information is less than the width of the route through which the moving body 90 can pass. For example, the movement route generation unit 60 generates the planned movement route that avoids an assumed movement route in which an obstacle is present in the characteristic information. Accordingly, the moving body 90 can reliably move along the planned movement route.

The movement route generation unit 60 may generate the planned movement route of the moving body 90 based on the first place P1 or the second place P2, the current position of the moving body 90, the moving performance of the moving body 90, and the characteristic information of the assumed movement route. Accordingly, the moving body 90 can reliably move along the planned movement route from the current position to the first place P1.

In a case where the virtual map update unit 40 (see Fig. 3) updates the virtual map 120, the movement route generation unit 60 may update the planned movement route. In a case where the virtual map 120 is updated, the information of the real space 110 stored in the real space information storage unit 12 may be updated. Therefore, in a case where the virtual map update unit 40 (see Fig. 3) updates the virtual map 120, the movement route generation unit 60 preferably updates the planned movement route.

The moving body 90 may include a detection unit that detects an obstacle in the real space 110. The detection unit may be an imaging unit (an example of the map acquisition unit 92) (see Fig. 1). The obstacle in the real space 110 is a target in the real space 110 that makes it difficult for the moving body 90 to move even though the place allows the moving body 90 to move in the virtual map 120. The obstacle is, for example, the structure body 114 that blocks a route when the structure body 114 falls on the road surface 112 due to an earthquake or the like. Such a structure body 114 is not displayed on the virtual map 120.

The movement information acquisition unit 64 acquires movement information regarding the movement of the moving body 90 in the real space 110. The movement information may be information of the real space 110 to which the moving body 90 has moved (see Fig. 7) or may be information of the real space 110 to which the moving body 90 moves (see Fig. 7). The information of the real space 110 to which the moving body 90 has moved refers to information of the real space 110 to which the moving body 90 has moved so far. The information of the real space 110 to which the moving body 90 moves refers to information of the real space 110 to which the moving body 90 moves from now. The movement information may be position information of the moving body 90. The position information of the moving body 90 may be current position information of the moving body 90 in the real space 110, may be information of the first place P1 to which the moving body 90 is to move, or may be information of the second place P2 to which the moving body 90 is to not move.

The moving body 90 may be able to autonomously travel to avoid an obstacle in the real space 110 by detecting the obstacle. In a case where the moving body 90 detects an obstacle while the moving body 90 autonomously travels along the planned movement route, the moving body 90 may deviate from the planned movement route. In a case where the movement information acquisition unit 64 (see Fig. 3) acquires that the moving body 90 deviates from the planned movement route, the movement route generation unit 60 may further update the planned movement route. Accordingly, the moving body 90 can reach the first place P1 even when deviating from the original planned movement route.

The virtual map 120 may include an initial position and a destination position of the movement of the moving body 90. The reception unit 62 (see Fig. 3) may receive designation of the initial position and the destination position. The designated initial position and destination position may be displayed on the virtual map 120. The display unit 70 (see Fig. 3) may display the movement information of the moving body 90 on the virtual map 120 including the initial position and the destination position of the moving body 90. In a case where the moving body 90 deviates from the planned movement route, the display unit 70 may display the position of the moving body 90 deviating from the planned movement route. In a case where the moving body 90 deviates from the planned movement route by detecting an obstacle, the position deviating from the planned movement route may be the position of the obstacle.

The instrument information acquisition unit 68 acquires instrument information of an instrument provided in the real space 110. The moving body 90 may acquire the instrument information. The imaging unit of the moving body 90 may acquire the instrument information of the instrument provided in the real space 110. For example, in a case where the instrument is a pressure gauge in a nuclear power generation facility, the imaging unit acquires the value of pressure indicated by the pressure gauge by imaging. The instrument information acquisition unit 68 may acquire the instrument information acquired by the moving body 90. For example, the instrument information acquisition unit 68 acquires the value of pressure acquired by the imaging unit.

The instrument information acquisition unit 68 may further acquire the position of the moving body 90 when the moving body 90 acquires the instrument information. The position information acquisition unit 94 of the moving body 90 may acquire the position of the moving body 90 when the moving body 90 acquires the instrument information. The instrument information acquisition unit 68 may acquire the position acquired by the position information acquisition unit 94.

The display unit 70 may display the instrument information acquired by the instrument information acquisition unit 68. For example, the display unit 70 displays the pressure value of the pressure gauge acquired by the instrument information acquisition unit 68. The display unit 70 may display the instrument information acquired by the instrument information acquisition unit 68 and the position of the moving body 90 when the moving body 90 acquires the instrument information.

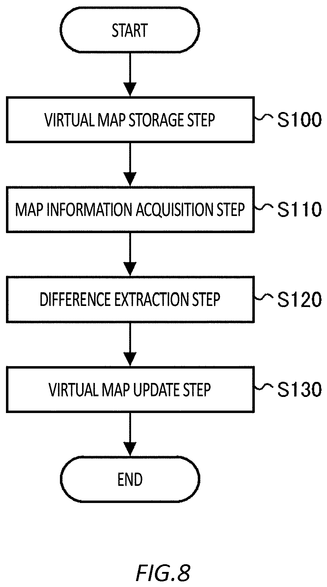

Fig. 8 is a flowchart illustrating an example of an information processing method according to an embodiment of the present invention. The information processing method according to the embodiment of the present invention will be described using the information processing apparatus 100 illustrated in Fig. 3 as an example.

A virtual map storage step S100 is a step in which the virtual map storage unit 10 stores the three-dimensional virtual map 120 corresponding to the real space 110. The virtual map storage step S100 may be a step in which the virtual map storage unit 10 stores the virtual map 120 acquired by the map information acquisition unit 20.

A map information acquisition step S120 is a step in which the map information acquisition unit 20 acquires the map information of the real space 110 from the plurality of moving bodies 90 moving in the real space 110. A difference extraction step S130 is a step in which the difference extraction unit 30 extracts a difference of each piece of map information from the virtual map 120. A virtual map update step S140 is a step in which, in a case where a difference for the same place is extracted from two or more pieces of map information, the virtual map update unit 40 updates the virtual map 120 based on the difference.

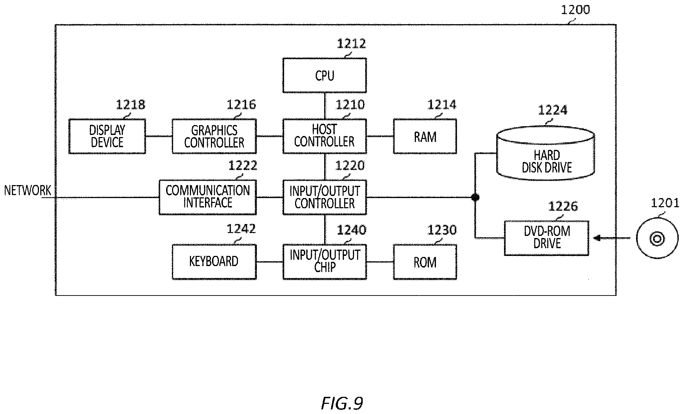

Fig. 9 is a diagram illustrating an example of a configuration of a computer 1200 in which a plurality of aspects of the present invention may be entirely or partially embodied. A program installed on the computer 1200 can cause the computer 1200 to function as an operation associated with an apparatus according to embodiments of the present invention or as one or more "unit(s)" of the apparatus, or to perform the operation or the one or more "unit(s)", and/or can cause the computer 1200 to perform processes according to embodiments of the present invention or steps of the processes. Such a program may be executed by a CPU 1212 to cause the computer 1200 to perform particular operations associated with some or all blocks in the flowcharts or block diagrams described herein. Processes according to embodiments of the present invention or steps of the processes may also be performed on a cloud network or the like.

The computer 1200 according to the present embodiment includes a CPU 1212, a RAM 1214, a graphics controller 1216 and a display device 1218, which are connected to each other by a host controller 1210. The computer 1200 also includes input/output units such as a communication interface 1222, a hard disk drive 1224, a DVD-ROM drive 1226 and an IC card drive, which are connected to the host controller 1210 via an input/output controller 1220. The computer also includes legacy input/output units such as a ROM 1230 and a keyboard 1242, which are connected to the input/output controller 1220 via an input/output chip 1240.

The CPU 1212 operates in accordance with programs stored in the ROM 1230 and the RAM 1214, and controls each unit accordingly. The graphics controller 1216 acquires image data generated by the CPU 1212 on a frame buffer or the like provided in the RAM 1214 or in the graphics controller 1216 itself, and displays the image data on the display device 1218.

The communication interface 1222 communicates with other electronic devices via a network. The hard disk drive 1224 stores programs and data to be used by the CPU 1212 in the computer 1200. The DVD-ROM drive 1226 reads programs or data from the DVD-ROM 1201, and provides the programs or data to the hard disk drive 1224 via the RAM 1214. The IC card drive reads the program and data from an IC card, and/or writes the program and data to the IC card.

The ROM 1230 has stored therein a boot program or the like to be executed by the computer 1200 at the time of activation, and/or a program that depends on the hardware of the computer 1200. The input/output chip 1240 may also connect various input/output units to the input/output controller 1220 via a parallel port, a serial port, a keyboard port, a mouse port or the like.

Programs are provided by a computer-readable storage medium such as the DVD-ROM 1201 or an IC card. The programs are read from the computer-readable storage medium, installed on the hard disk drive 1224, the RAM 1214 or the ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, if communication is made between the computer 1200 and external devices, the CPU 1212 may execute a communication program loaded on the RAM 1214, and instruct the communication interface 1222 to perform communication processing based on the processing described in the communication program. Under the control of the CPU 1212, the communication interface 1222 reads transmission data stored in a transmission buffer region provided in a recording medium such as the RAM 1214, the hard disk drive 1224, the DVD-ROM 1201 or an IC card, and sends the read transmission data to the network, or writes reception data received from the network into a reception buffer region or the like provided in the recording medium.

The CPU 1212 may also make all or required portions of the files or databases stored in an external recording medium such as the hard disk drive 1224, the DVD-ROM drive 1226 (DVD-ROM 1201) or an IC card to be read by the RAM 1214, and perform various types of processing on the data on the RAM 1214. Next, the CPU 1212 may write the processed data back into the external recording medium.

Various types of information such as various types of programs, data, tables and databases may be stored in the recording medium for information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search the plurality of entries for an entry whose attribute value of the first attribute matches a designated condition, read the attribute value of the second attribute stored in the entry, and thereby acquire the attribute value of the second attribute associated with the first attribute that meets a predetermined condition.

The programs or software modules in the above description may be stored on the computer 1200 or a computer-readable storage medium near the computer 1200. Further, a recording medium such as a hard disk or a RAM provided in a server system connected to a dedicated communication network or the Internet can be used as a computer-readable storage media, which provides programs to the computer 1200 via the network.

While the present invention has been described by way of the embodiments, the technical scope of the present invention is not limited to the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: virtual map storage unit; 12: real space information storage unit; 20: map information acquisition unit; 30: difference extraction unit; 40: virtual map update unit; 50: control unit; 60: movement route generation unit; 62: reception unit; 64: movement information acquisition unit; 68: instrument information acquisition unit; 70: display unit; 90: moving body; 92: map acquisition unit; 94: position information acquisition unit; 100: information processing apparatus; 110: real space; 112: road surface; 114: structure body; 120: virtual map; 1200: computer; 1201: DVD-ROM; 1210: host controller; 1212: CPU; 1214: RAM ; 1216: graphics controller; 1218: display device; 1220: input/output controller; 1222: communication interface; 1224: hard disk drive; 1226: DVD-ROM drive; 1230: ROM; 1240: input/output chip; and 1242: keyboard.

## Claims

1. An information processing apparatus comprising:
a virtual map storage unit which stores a virtual map that is three-dimensional and corresponds to a real space;
a map information acquisition unit which acquires map information of the real space from a plurality of moving bodies moving in the real space;
a difference extraction unit which extracts a difference of each piece of the map information from the virtual map; and
a virtual map update unit which updates the virtual map based on the difference in a case where the difference for a same place is extracted from two or more pieces of the map information.

2. The information processing apparatus according to claim 1, wherein
the map information acquisition unit acquires the map information for each place equivalent to the place in the real space from the plurality of moving bodies moving in the real space,
the difference extraction unit judges a similarity degree in the difference between the map information and the virtual map for the same place, and
the virtual map update unit updates the virtual map based on the similarity degree.

3. The information processing apparatus according to claim 2, wherein
the difference extraction unit judges the similarity degree based on a resolution of an image captured by each of the plurality of moving bodies images.

4. The information processing apparatus according to claim 3, wherein
the image is the map information.

5. The information processing apparatus according to claim 2,
the difference extraction unit judges the similarity degree based on accuracy of acquiring the place of each of the plurality of moving bodies.

6. The information processing apparatus according to any one of claims 2 to 5, wherein
the map information acquisition unit acquires time when the map information is acquired for the same place, and
the difference extraction unit extracts the difference based on the similarity degree and the time.

7. The information processing apparatus according to any one of claims 1 to 6, further comprising:
a reception unit which receives designation of a first place to which a moving body being equivalent to each of the plurality of moving bodies is to move or a second place to which the moving body is to not move on the virtual map; and
a movement route generation unit which generates a planned movement route of the moving body based on the first place or the second place designated and a current position of the moving body, wherein
in a case where the virtual map update unit updates the virtual map, the movement route generation unit updates the planned movement route.

8. The information processing apparatus according to any one of claims 1 to 7, wherein
the virtual map storage unit stores characteristic information of an assumed movement route along which a moving body being equivalent to each of the plurality of moving bodies moves in the real space,
the information processing apparatus further comprises a movement route generation unit which generates a planned movement route of the moving body based on moving performance of the moving body and the characteristic information, and
in a case where the virtual map update unit updates the virtual map, the movement route generation unit updates the planned movement route.

9. The information processing apparatus according to claim 7 or 8, further comprising
a movement information acquisition unit which acquires movement information regarding movement of the moving body in the real space, wherein
in a case where the movement information acquisition unit acquires that, while the moving body autonomously travels along the planned movement route to avoid an obstacle in the real space by detecting the obstacle, the moving body deviates from the planned movement route by detecting the obstacle, the movement route generation unit further updates the planned movement route.

10. The information processing apparatus according to claim 9, further comprising
a display unit which displays a position of the moving body deviating from the planned movement route in a case where the moving body deviates from the planned movement route.

11. The information processing apparatus according to any one of claims 1 to 10, wherein
the difference extraction unit acquires a number of times of extraction in which the difference is extracted for the same place, and
the information processing apparatus further comprises a display unit which performs predetermined display on the same place in a case where the number of times of extraction exceeds a predetermined number of times.

12. The information processing apparatus according to any one of claims 1 to 10, further comprising:
a movement information acquisition unit which acquires movement information regarding movement of a moving body being equivalent to each of the plurality of moving bodies in the real space; and
a display unit which displays the movement information on the virtual map including an initial position and a destination position of movement of the moving body.

13. The information processing apparatus according to claim 12, wherein the movement information includes at least one of information of the real space in which the moving body has moved, information of the real space in which the moving body moves, or position information of the moving body.

14. The information processing apparatus according to any one of claims 1 to 13, further comprising:
an instrument information acquisition unit which acquires, from a moving body being equivalent to each of the plurality of moving bodies, instrument information of an instrument provided in the real space; and
a display unit which displays the instrument information.

15. The information processing apparatus according to claim 14, wherein
the moving body acquires the instrument information,
the instrument information acquisition unit acquires the instrument information acquired by the moving body,
the instrument information acquisition unit further acquires a position of the moving body when the moving body acquires the instrument information, and
the display unit displays the position of the moving body.

16. An information processing method comprising:
storing a virtual map that is three-dimensional and corresponds to a real space;
acquiring map information of the real space from a plurality of moving bodies moving in the real space;
extracting a difference of each piece of the map information from the virtual map; and
updating the virtual map based on the difference in a case where the difference for a same place is extracted from two or more pieces of the map information.

17. An information processing program for causing a computer to execute the information processing method according to claim 16.
